# EUROPEAN PATENT APPLICATION

(11) **EP 4 729 307 A1**
(43) Date of publication of application: **22.04.2026**
(21) Application number: 24823698.6
(22) Date of filing: 12.06.2024
(51) Int. Cl.: B60C 9/18

(54) **TIRE**

(30) Priority: 13.06.2023 KR 20230075536
(71) Applicant: HANKOOK TIRE & TECHNOLOGY CO., LTD, Gyeonggi-do 13494 (KR)
(72) Inventor: HWANG, Jeongho, Daejeon 34127 (KR)
(74) Representative: Witte, Weller & Partner Patentanwälte mbB
(86) International application number: PCT/KR2024/008063
(87) International publication number: WO 2024/258180

(57) **Abstract**

Disclosed are a tire. A tire according to an embodiment of the present disclosure a tread portion including a center block formed on the width-directional center side of the tire, and a groove extending in the circumferential direction of the tire, a carcass portion provided inside the tread portion, a belt portion laminated on the upper part of the carcass portion, a reinforcement belt portion laminated on the upper part of the belt portion and an additional belt portion provided between the reinforcement belt portion and the center block.

## Description

### BACKGROUND

### Field

The present disclosure relates to a tire, and more particularly, to a tire capable of improving ride comfort and durability simultaneously with the lightweighting of the tire.

### Description of the Related Art

Most countries, with the exception of some like Europe, Asia-Pacific, and Russia, operate a certification system that includes the Plunger Test (also often called the Tire Strength Test).

While the Plunger Test was not a major concern until now, the global emphasis on eco-friendliness and the rising cost of raw materials have increased the importance of Rolling Resistance (RR) performance and weight reduction. Consequently, the resulting lightweighting of products frequently causes tires to fail the Plunger Test due to insufficient strength, necessitating structural reinforcement.

The Plunger Test is a procedure that evaluates the energy value when a tire is punctured by applying a load to the tread area using a plunger. The Plunger Test is conducted using equipment that satisfies legal regulations, where a rod-shaped plunger is used to press a specific block of the tire. The deformation energy is measured using the load and displacement generated during this process. This deformation energy must satisfy the criteria stipulated by the regulations of each country.

Conventional tires, with their sufficiently reinforced structures, generally satisfied the legal requirements of each country. However, as the materials and structures of semifinished products layered beneath the tread-such as the carcass, belts, and reinforcement belts-are being lightweighted, cases of non-compliance with regulations are occurring.

Therefore, technology is required to improve the strength of the tire simultaneously with its lightweighting.

### SUMMARY

An object to be achieved by the present embodiment is to provide a tire featuring a reinforcement structure that improves ride comfort and durability while simultaneously achieving lightweighting and enhanced strength of the tire.

A tire according to an embodiment of the present disclosure includes: A tread portion including a center block formed on the width-directional center side of the tire, and a groove extending in the circumferential direction of the tire, A carcass portion provided inside the tread portion, A belt portion laminated on the upper part of the carcass portion, A reinforcement belt portion laminated on the upper part of the belt portion and An additional belt portion provided between the reinforcement belt portion and the center block.

The carcass portion is configured as at least one ply, the belt portion is configured as at least two plies, and the reinforcement belt portion is configured as at least one ply.

The belt portion comprises: A first belt laminated on the upper part of the carcass portion; and A second belt laminated on the upper part of the first belt, and The first belt and the second belt are configured as a High Tensile Belt or a Super High Tensile Belt (Ultra Tensile Belt).

The reinforcement belt portion is provided with a closed pitch, and the additional belt portion is laminated and formed on the upper part of the reinforcement belt portion.

The reinforcement belt portion is provided with an open pitch, and the additional belt portion is laminated and formed on the upper part of the reinforcement belt portion.

A tire according to another embodiment of the present disclosure includes: A tread portion including a center groove extending in the circumferential direction of the tire on the width-directional center side of the tire, and center blocks formed on both sides of the center groove, A carcass portion provided inside the tread portion, A belt portion laminated on the upper part of the carcass portion, A reinforcement belt portion laminated on the upper part of the belt portion and An additional belt portion provided between the reinforcement belt portion and the center blocks.

The carcass portion is configured as at least one ply, the belt portion is configured as at least two plies, and the reinforcement belt portion is configured as at least one ply.

The belt portion comprises: A first belt laminated on the upper part of the carcass portion; and A second belt laminated on the upper part of the first belt, and The first belt and the second belt are configured as a High Tensile Belt or a Super High Tensile Belt (Ultra Tensile Belt).

The reinforcement belt portion is provided with a closed pitch, and the additional belt portion is laminated and formed on the upper part of the reinforcement belt portion.

The reinforcement belt portion is provided with an open pitch, and the additional belt portion is laminated and formed on the upper part of the reinforcement belt portion.

According to the tire according to the present embodiment, it is possible to reduce in the number of plies of the carcass portion, belt, and reinforcement belt portion compared to conventional tires allows for structural lightweighting, thereby enabling the manufacturing of eco-friendly tires.

According to the tire according to the present embodiment, it is possible to decrease in strength resulting from the structural lightweighting is reinforced by providing the partial additional belt portion, which offers the effect of achieving structural lightweighting while simultaneously preventing a reduction in durability.

The effects of the present disclosure are not limited to the aforementioned effects, and other effects, which are not mentioned above, will be apparently understood to a person having ordinary skill in the art from the following description.

The objects to be achieved by the present disclosure, the means for achieving the objects, and the effects of the present disclosure described above do not specify essential features of the claims, and, thus, the scope of the claims is not limited to the disclosure of the present disclosure.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is an enlarged cross-sectional view of a tire according to the first embodiment of the present invention.
FIG. 2 is a cross-sectional view showing the overall configuration of the tire according to the first embodiment of the present invention.
FIG. 3 is a cross-sectional view showing the main configuration of the tire according to the first embodiment of the present invention.
FIG. 4 is a cross-sectional view showing the main configuration of the tire according to the second embodiment of the present invention.
FIG. 5 is a cross-sectional view showing the overall configuration of the tire according to the third embodiment of the present invention.
FIG. 6 is a cross-sectional view showing the main configuration of the tire according to the third embodiment of the present invention.
FIG. 7 is a cross-sectional view showing the main configuration of the tire according to the fourth embodiment of the present invention.

### DETAILED DESCRIPTION OF THE EMBODIMENT

Hereinafter, the exemplary embodiment of the present disclosure will be described with reference to the accompanying drawings and exemplary embodiments as follows. Scales of components illustrated in the accompanying drawings are different from the real scales for the purpose of description, so that the scales are not limited to those illustrated in the drawings.

Hereinafter, embodiments of the present disclosure will be described in detail with reference to the accompanying drawings. The following embodiments are presented to sufficiently provide the spirit of the present disclosure to those skilled in the art to which the present disclosure pertains. The present disclosure is not limited to the embodiments presented herein and may be specified as other aspects. The constituent elements irrelevant to the description of the present disclosure will be omitted from the drawings to clearly describe the present disclosure. The sizes of the constituent elements may be somewhat exaggerated for purposes of understanding.

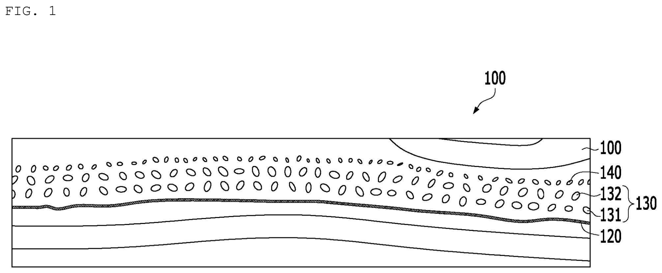

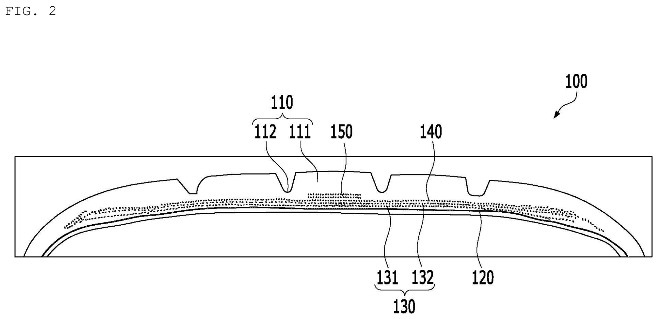

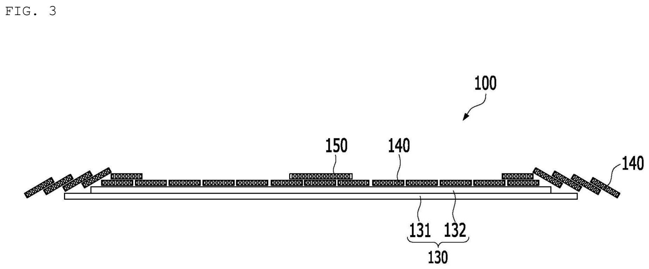

FIG. 1 is an enlarged cross-sectional view of a tire according to the first embodiment of the present invention, FIG. 2 is a cross-sectional view showing the overall configuration of the tire according to the first embodiment of the present invention, and FIG. 3 is a cross-sectional view showing the main configuration of the tire according to the first embodiment of the present invention.

As shown in FIGS. 1 to 3, a tire 100 according to the first embodiment may include a tread portion 110, a carcass portion 120, a belt portion 130, a reinforcement belt portion 140, and an additional belt portion 150.

The tread portion 110 may include a center block 111 and a groove 112. The center block 111 may be positioned at the width center of the tread portion 110. The grooves 112 may be provided on both sides of the center block 111 and may be formed to extend in the circumferential direction of the tire.

The carcass portion 120 is provided inside the tread portion 110 and may be provided to form the framework of the tire. The carcass portion 120 may be composed of a cord layer wrapped in rubber, and may be configured as one ply.

The belt portion 130 may be laminated on the upper part of the carcass portion 120 and provided between the tread portion 110 and the carcass portion 120. More specifically, the belt portion 130 may include a first belt 131 laminated on the upper part of the carcass portion 120 and a second belt 132 laminated on the upper part of the first belt 131.

The belt portion 130 is thus configured as two belts and may be provided to firmly hold the carcass portion 120, thereby increasing the elasticity of the tread portion 110. Additionally, the belt portion 130 may be made of a High Tensile Belt or a Super High Tensile Belt (Ultra Tensile Belt).

The reinforcement belt portion 140 may be provided to be laminated on the upper part of the belt portion 130. In this case, the reinforcement belt portion 140 may be formed to extend longer than the belt portion 130 to reinforce the sides of the belt portion 130.

In particular, the reinforcement belt portion 140 according to the first embodiment may be provided with a closed pitch. Here, closed pitch means that the reinforcement belt portion 140 is formed continuously without sections where it is spaced apart in the middle. The reinforcement belt portion 140 may be formed as one ply.

The additional belt portion 150 may be laminated and formed on the upper part of the reinforcement belt portion 140. More specifically, the additional belt portion 150 may be formed on the upper part of the reinforcement belt portion 140 and inside the tread portion 110, at a position corresponding to the center block 111, which is the area pressed by the plunger.

The additional belt portion 150 may be formed to have a length equal to or less than the width of the center block 111. At this time, the additional belt portion 150 may be laminated and formed as one or more plies.

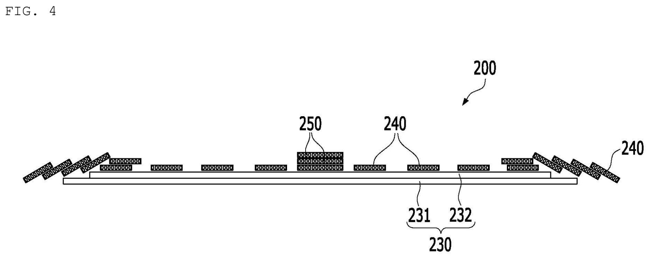

FIG. 4 is a cross-sectional view showing the main configuration of the tire according to the second embodiment of the present invention.

Referring to FIG. 4, the tread portion, carcass portion, and belt portion of the tire 200 according to the second embodiment are substantially the same as the configuration of the tire 100 according to the first embodiment, and thus a detailed description is omitted.

The reinforcement belt portion 240 according to the second embodiment may be provided to be laminated on the upper part of the belt portion 230. In this case, the reinforcement belt portion 240 may be formed to extend longer than the belt portion 230 to reinforce the sides of the belt portion 230. In particular, the reinforcement belt portion 240 according to the second embodiment may be provided with an open pitch.

Specifically, the reinforcement belt portion 240 generally adopts nylon or Aramid hybrid to increase performance such as NV performance improvement (rumble) and high-speed durability, but this tends to worsen pattern noise. Therefore, to improve this, the reinforcement belt portion 240 forms spaced-apart sections where the reinforcement belt is not continuously formed in the middle. This is called open pitch. The reinforcement belt portion 240 provided in this way may be formed as one ply.

The additional belt portion 250 may be laminated and formed on the upper part of the reinforcement belt portion 240. More specifically, the additional belt portion 250 may be formed on the upper part of the reinforcement belt portion 240 and inside the tread portion, at a position corresponding to the center block, which is the area pressed by the plunger.

The additional belt portion 250 may be formed to have a length equal to or less than the width of the center block. At this time, due to the open pitch, the additional belt portion 250 may be laminated and placed on the upper part of the belt portion 230 in the section where the reinforcement belt is not formed. Also, the additional belt portion 250 may be laminated and formed as two or more plies to further enhance durability.

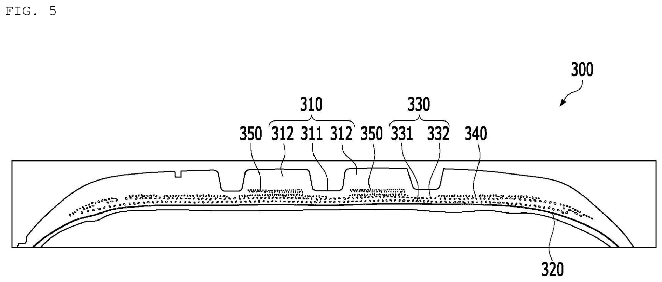

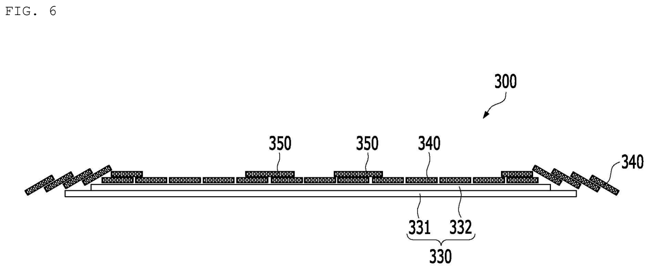

FIG. 5 is a cross-sectional view showing the overall configuration of the tire according to the third embodiment of the present invention, and FIG. 6 is a cross-sectional view showing the main configuration of the tire according to the third embodiment of the present invention.

As shown in FIGS. 5 and 6, a tire 300 according to the third embodiment may include a tread portion 310, a carcass portion 320, a belt portion 330, a reinforcement belt portion 340, and an additional belt portion 350.

The tread portion 310 may include a center groove 311 and center blocks 312. The center groove 311 may be provided to extend in the circumferential direction of the tire along the width center axis of the tread portion 310. The center blocks 312 may be formed on both sides of the center groove 311.

The carcass portion 320 is provided inside the tread portion 310 and may be provided to form the framework of the tire. The carcass portion 320 may be composed of a cord layer wrapped in rubber, and may be configured as one ply.

The belt portion 330 may be laminated on the upper part of the carcass portion 320 and provided between the tread portion 310 and the carcass portion 320. More specifically, the belt portion 330 may include a third belt 331 laminated on the upper part of the carcass portion 320 and a second belt 332 laminated on the upper part of the third belt 331.

The belt portion 330 is thus configured as two belts and may be provided to firmly hold the carcass portion 320, thereby increasing the elasticity of the tread portion 310. Additionally, the belt portion 330 may be made of a High Tensile Belt or a Super High Tensile Belt (Ultra Tensile Belt).

The reinforcement belt portion 340 may be provided to be laminated on the upper part of the belt portion 330. In this case, the reinforcement belt portion 340 may be formed to extend longer than the belt portion 330 to reinforce the sides of the belt portion 330.

In particular, the reinforcement belt portion 340 according to the third embodiment may be provided with a closed pitch. Here, closed pitch means that the reinforcement belt portion 340 is formed continuously without sections where it is spaced apart in the middle. The reinforcement belt portion 340 may be formed as one ply.

The additional belt portion 350 may be laminated and formed on the upper part of the reinforcement belt portion 340. More specifically, the additional belt portion 350 may be formed on the upper part of the reinforcement belt portion 340 and inside the tread portion 310, at positions corresponding to the pair of center blocks 312, which are the areas pressed by the plunger. The additional belt portion 350 may be formed to have a length equal to or less than the width of each of the pair of center blocks 312.

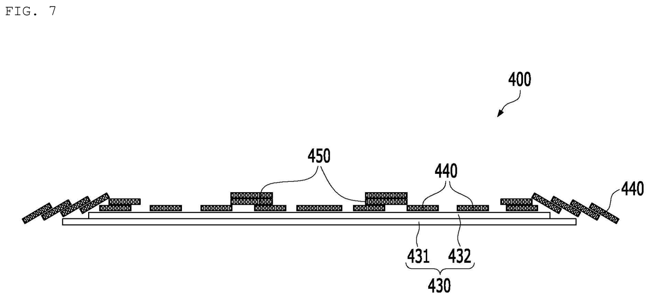

FIG. 7 is a cross-sectional view showing the main configuration of the tire according to the fourth embodiment of the present invention.

Referring to FIG. 7, the tread portion, carcass portion, and belt portion of the tire 400 according to the fourth embodiment are substantially the same as the configuration of the tire 300 according to the third embodiment, and thus a detailed description is omitted.

The reinforcement belt portion 440 according to the fourth embodiment may be provided to be laminated on the upper part of the belt portion 430. In this case, the reinforcement belt portion 440 may be formed to extend longer than the belt portion 430 to reinforce the sides of the belt portion 430. In particular, the reinforcement belt portion 440 according to the fourth embodiment may be provided with an open pitch.

Specifically, the reinforcement belt portion 440 generally adopts nylon or Aramid hybrid to increase performance such as NV performance improvement (rumble) and high-speed durability, but this tends to worsen pattern noise. Therefore, to improve this, the reinforcement belt portion 440 forms spaced-apart sections where the reinforcement belt is not continuously formed in the middle. This is called open pitch. The reinforcement belt portion 440 provided in this way may be formed as one ply.

The additional belt portion 450 may be laminated and formed on the upper part of the reinforcement belt portion 440. More specifically, the additional belt portion 450 may be formed on the upper part of the reinforcement belt portion 440 and inside the tread portion, at positions corresponding to the pair of center blocks, which are the areas pressed by the plunger.

The additional belt portion 450 may be formed to have a length equal to or less than the width of each of the pair of center blocks. At this time, the additional belt portion 450 may be laminated and placed on the upper part of the belt portion 430 in the section where the reinforcement belt is not formed due to the open pitch. Also, the additional belt portion 450 may be laminated and formed as two or more plies to further enhance durability.

As described above, according to the present invention, the reduction in the number of plies of the carcass portion, belt, and reinforcement belt portion compared to conventional tires allows for structural lightweighting, thereby enabling the manufacturing of eco-friendly tires.

Furthermore, according to the present invention, the decrease in strength resulting from the structural lightweighting is reinforced by providing the additional belt portion partially, which offers the effect of achieving structural lightweighting while simultaneously preventing a reduction in durability.

In particular, the additional belt portion reinforces the area where pressure is applied by the plunger in the Plunger Test, allowing the tire to pass the Plunger Test, which is a required standard.

While the specific embodiments of the tire according to the present disclosure have been described above, it is apparent that various modifications may be made without departing from the scope of the present disclosure.

Therefore, the scope of the present disclosure should not be limited to the described embodiments and should be defined by not only the claims to be described below, but also those equivalent to the claims.

That is, it should be understood that the aforementioned exemplary embodiments are described for illustration in all aspects and are not limited, and the scope of the present disclosure shall be represented by the claims to be described below, and it should be construed that all of the changes or modified forms induced from the meaning and the scope of the claims, and an equivalent concept thereto are included in the scope of the present disclosure.

## Claims

1. A tire comprising:
A tread portion including a center block formed on the width-directional center side of the tire, and a groove extending in the circumferential direction of the tire;
A carcass portion provided inside the tread portion;
A belt portion laminated on the upper part of the carcass portion;
A reinforcement belt portion laminated on the upper part of the belt portion; and
An additional belt portion provided between the reinforcement belt portion and the center block.

2. The tire of claim 1, wherein the carcass portion is configured as at least one ply, the belt portion is configured as at least two plies, and the reinforcement belt portion is configured as at least one ply.

3. The tire of claim 2, wherein the belt portion comprises: A first belt laminated on the upper part of the carcass portion; and A second belt laminated on the upper part of the first belt, and The first belt and the second belt are configured as a High Tensile Belt or a Super High Tensile Belt (Ultra Tensile Belt).

4. The tire of claim 1, wherein the reinforcement belt portion is provided with a closed pitch, and the additional belt portion is laminated and formed on the upper part of the reinforcement belt portion.

5. The tire of claim 1, wherein the reinforcement belt portion is provided with an open pitch, and the additional belt portion is laminated and formed on the upper part of the reinforcement belt portion.

6. A tire comprising:
A tread portion including a center groove extending in the circumferential direction of the tire on the width-directional center side of the tire, and center blocks formed on both sides of the center groove;
A carcass portion provided inside the tread portion;
A belt portion laminated on the upper part of the carcass portion;
A reinforcement belt portion laminated on the upper part of the belt portion; and
An additional belt portion provided between the reinforcement belt portion and the center blocks.

7. The tire of claim 6, wherein the carcass portion is configured as at least one ply, the belt portion is configured as at least two plies, and the reinforcement belt portion is configured as at least one ply.

8. The tire of claim 7, wherein the belt portion comprises: A first belt laminated on the upper part of the carcass portion; and A second belt laminated on the upper part of the first belt, and The first belt and the second belt are configured as a High Tensile Belt or a Super High Tensile Belt (Ultra Tensile Belt).

9. The tire of claim 6, wherein the reinforcement belt portion is provided with a closed pitch, and the additional belt portion is laminated and formed on the upper part of the reinforcement belt portion.

10. The tire of claim 6, wherein the reinforcement belt portion is provided with an open pitch, and the additional belt portion is laminated and formed on the upper part of the reinforcement belt portion.
